# EUROPEAN PATENT SPECIFICATION

(11) **EP 3 115 870 B1**
(45) Date of publication and mention of the grant of the patent: **08.11.2023**
(21) Application number: 15175984.2
(22) Date of filing: 09.07.2015
(51) Int. Cl.: G06F 3/01

(54) **MONITORING**
ÜBERWACHUNG
SURVEILLANCE

(43) Date of publication of application: 11.01.2017
(73) Proprietor: Nokia Technologies Oy, 02610 Espoo (FI)
(72) Inventor: Lehtiniemi, Arto Juhani, 33880 Lempäälä (FI); Eronen, Antti Johannes, 33820 Tampere (FI); Mate, Sujeet Shyamsundar, 33720 Tampere (FI); Cricri, Francesco, 33200 Tampere (FI)
(74) Representative: Swindell & Pearson Limited

(56) References cited:
- WO-A1-2012/141351
- US-A1- 2013 024 819
- US-A1- 2014 267 004

## Description

### TECHNOLOGICAL FIELD

Embodiments of the present invention relate to monitoring a scene. In particular, they relate to automated monitoring of a scene.

### BACKGROUND

Current monitoring systems, such as surveillance systems, may comprise one or more cameras for video recording, with or without audio recording, connected via wires or wirelessly to a hub that stores or enables storage of the data recorded from the scene. An operator may, in some examples, be able to use the hub to program settings for the cameras and/or the hub.

US 2014/0267004 discloses a method for adjusting an active area of a sensor's field of view by recognizing gestures which control adjustment of the boundaries of the active area.

US2013/0024819 discloses systems and methods for gesture-based creation of interactive hotspots in a real-world environment. Different types of gesture are disclosed for hotspot creation. Once a hotspot has been created, an activity may be initiated by touching the hotspot.

### BRIEF SUMMARY

The invention is set out in the appended set of claims.

### BRIEF DESCRIPTION

For a better understanding of various examples that are useful for understanding the brief description, reference will now be made by way of example only to the accompanying drawings in which:
Fig 1 schematically illustrates an example of a system;
Fig 2 illustrates an example of a state machine;
Fig 3 illustrates an example of a processing module;
Fig 4 illustrates an example of a delivery mechanism for a computer program;
Fig 5 illustrates an example of operation of the system;
Figs 6A-C and Figs 7A-7D illustrate examples of operation of the system;
Fig 8A, 8B and 9A, 9B illustrate extension of a computer-implemented virtual boundary; and
Fig 10 illustrates an example of a method.

### DETAILED DESCRIPTION

The system 100 described is a system that monitors at least one scene. A scene is a place where an event may occur. The operation of the system can be controlled by a user within the scene by carrying out actions within the scene. For example, the user is able to control the system so that the user can define at least one virtual boundary to be monitored by the system.

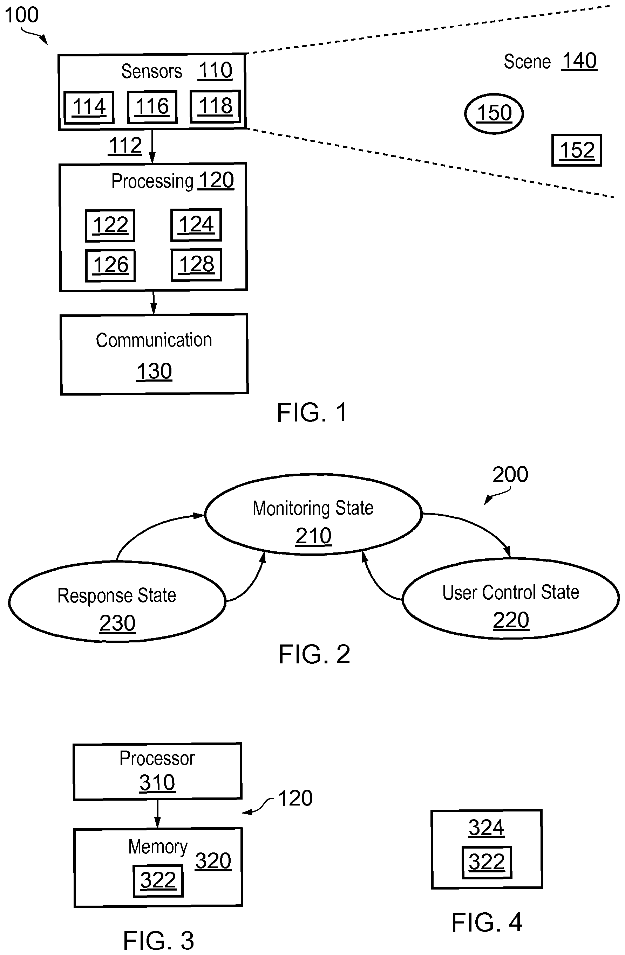

Fig 1 schematically illustrates a system 100 comprising: one or more sensors 110 configured to record sensor data 112 from a scene 140; a processing module 120 configured to process the sensor data 112 recorded from the scene 140 to recognize automatically events that occur in the scene 140 and to automatically take decisions as a consequence of the recognition; and a communication module 130 configured to communicate, when a decision to communicate is taken by the processing module 120.

Some but not necessarily all of the events that are recognized may relate to an object 152 or a particular object 152 in the scene 140. An object may be an inanimate object, an animal, a person or a particular person 150 in the scene 140. In some but not necessarily all examples of the system 100, the system 100 is a real-time recognition system and the automatic recognition and decision, if any, occur substantially at the same time as the sensor data 112 is recorded.

The system 100 may be used for surveillance, monitoring, assisted living, elderly care or other applications. The system 100 may be used in businesses, public areas or at home. One expected use is as a home surveillance system.

The system 100 may enable a user to control monitoring, for example, when the user is a person 150 in the scene 140. The system 100 may enable a user to control recognition and/or a consequence of recognition, for example, when the user is a person 150 in the scene 140.

In some but not necessarily all examples, the system 100 may comprise a number of discrete apparatus. For example, the sensors 110 may be housed in one or more separate apparatus, the processing module 120 may be housed in one or more apparatus and the communication module 130 may be housed in one or more apparatus. Where a component or components of the system 100 are housed in discrete apparatus, those apparatus may be local or remote to each other and, where they are remote they may communicate, for example, over a network.

In some but not necessarily all examples, the system 100 may be housed in a single apparatus.

The sensors 110 are configured to record or enable recording of sensor data 112 from the scene 140.

A scene 140 may comprise static components that have, for example, fixed relative positions, such as for example static objects. These static objects have different static positions in the scene's three-dimensional space (scene space). A scene 140 may comprise moving components, such as for example a moving object. A moving object has different positions in the scene space over time. Reference to 'the scene' in relation to different sensor data 112 or different times implies a continuity of those static components of the scene 140 that are sensed, it does not necessarily imply a continuity of some or all of the dynamic components although this may occur.

The recording of sensor data 112 may comprise only temporary recording, or it may comprise permanent recording or it may comprise both temporary recording and permanent recording, Temporary recording implies the recording of data temporarily. This may, for example, occur during sensing, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur.

The sensors 110 may be configured to transduce propagating waves, such as sound waves and/or light waves, to electrical signals encoding the propagating wave data from the scene 140 as sensor data 112.

In some but not necessarily all examples, the sensors 110 are fixed in space relative to the scene space 140. In other examples, the sensors 110 are movable or moving relative to the scene space 140.

In the present invention, the sensors 110 are or comprise image sensors 114. An example of an image sensor 114 is a digital image sensor that is configured to operate as a camera. Such a camera may be operated to record static images and/or video images.

In some, but not necessarily all embodiments, cameras may be configured in a stereoscopic or other spatially distributed arrangement so that the scene 140 is viewed from different perspectives. This may enable the creation of a three-dimensional image and/or processing to establish depth, for example, via the parallax effect.

In some, but not necessarily all embodiments, the sensors 110 are or comprise audio sensors 116. An example of an audio sensor 116 is a microphone or microphones. Microphones may be configured in a stereoscopic or other spatially distributed arrangement such as a microphone array so that the scene 140 is sampled from different perspectives. This may enable three-dimensional spatial audio processing, that allows positioning of audio within the scene 140.

In some, but not necessarily all embodiments, the sensors are or comprise depth sensors 118. A depth sensor 118 may comprise a transmitter and a receiver. The transmitter transmits a signal (for example, a signal a human cannot sense such as ultrasound or infrared light) and the receiver receives the reflected signal. Using a single transmitter and a single receiver some depth information may be achieved via measuring the time of flight from transmission to reception. Better resolution may be achieved by using more transmitters and/or more receivers (spatial diversity). In one example, the transmitter is configured to `paint` the scene 140 with light, preferably invisible light such as infrared light, with a spatially dependent pattern. Detection of a certain pattern by the receiver allows the scene 140 to be spatially resolved. The distance to the spatially resolved portion of the scene 140 may be determined by time of flight and/or stereoscopy (if the receiver is in a stereoscopic position relative to the transmitter).

In these or 'non-active' examples of depth sensing the person 150 or object 152 to be sensed are passive and merely reflect incident light or sound waves emitted by a transmitter. However, 'active' examples, which require activity at the sensed object, may additionally or alternatively be used. As an example, a person 150 may carry a positioning apparatus that is configured to position the positioning apparatus within the scene space 140. The positioning apparatus may for example measure motion of the positioning apparatus from a reference position using accelerometers. Gyroscopes may optionally be used to determine orientation. Additionally or alternatively, the positioning apparatus may enable positioning via triangulation (trilateration) by transmitting to multiple receivers and/or receiving from multiple transmitters.

In the illustrated example, but not necessarily all examples, the processing module 120 comprises a memory sub-module 122, a processing sub-module 124, a recognition sub-module 126, and a control sub-module 128. While the 'modules' are described and illustrated separately they may be, although they need not be, separate or combined in different combinations. For example, the processing sub-module 124, the recognition sub-module 126, and the control sub-module 128 may be performed by the same circuitry or under the control of the same computer program. Alternatively one or more of the processing sub-module 124, the recognition sub-module 126, and the control sub-module 128 may be performed by dedicated circuitry or a dedicated computer program. The sub-modules may be performed using software, dedicated hardware or a mix of programmed hardware and software.

The memory sub-module 122 may be used to store unprocessed sensor data 111 and/or processed sensor data 112 (scene data), computer programs, scene space models and other data used by the processing module 120, although other sub-modules may have their own memories.

The processing sub-module 124 may be configured to process the sensor data 112 to determine scene data that is meaningful about the scene 140.

The processing sub-module 124 may be configured to perform image processing where the sensor data 110 comprises image data from a camera or cameras 114. The processing sub-module 124 may be configured to perform audio processing where the sensor data 110 comprises audio data from a microphone or microphones 116.

The processing sub-module 124 may be configured to perform automatically one or more of the following tasks using the sensor data 112 to create scene data that has potential meaning for the scene 140:
use machine (computer) vision to perform one or more of:
   detect a (moving or stationary) object or person,
   classify a (moving or stationary) object or person, and/or
   track a (moving or stationary) object or person;
use spatial analysis to perform one or more of:
   position a (moving or stationary) object in the scene space using depth determination; and/or
   create a map of the scene space; and/or
use behavior analysis to describe an event that occurs in the scene 140 as a potentially meaningful symbol.

An example of image processing is 'histogram of gradient features' analysis which creates a distribution of intensity gradients or edge directions for an image. The image may be divided into small connected regions (cells), and for each cell, a histogram of gradient directions or edge orientations is created for the pixels within the cell. The combination of these histograms then represents a descriptor.

An example of audio processing is `mel-frequency cepstral coefficients' determination, spatial audio processing using, for example, audio beamforming techniques, audio event recognition or classification, speaker recognition or verification or speech recognition.

Motion detection may be achieved, for example, using differencing with respect to a background model (background subtraction) or with respect to a preceding image (temporal differencing), or using some other approach such as optical flow analysis using a vector-based approach.

Object classification may be achieved, for example, using shape-based analysis and/or motion-based analysis.

Classification of a person may be classification that an object is human or classification that an object is a particular human (identification). Identification may be achieved using an attribute or a combination of attributes that uniquely identifies a person within the set of possible persons. Examples of attributes include: biometric features that are or may be particular to a person such as their face or their voice: their shape and size; their behavior.

Object tracking may be achieved by labeling objects and recording the position in the scene 140 of the labeled object. The algorithm may need to deal with one or more of the following events: object entrance to the scene 140; object exit from the scene 140; object re-entrance to the scene 140; object occlusion; object merge. How to deal with these events is known in the art.

Object tracking may be used to determine when an object or person changes. For example, tracking the object on a large macro-scale allows one to create a frame of reference that moves with the object. That frame of reference can then be used to track time-evolving changes of shape of the object, by using temporal differencing with respect to the object. This can be used to detect small scale human motion such as gestures, hand movement, facial movement. These are scene independent user (only) movements relative to the user.

The system may track a plurality of objects and/or points in relation to a person's body, for example one or more joints of the person's body. In some examples, the system 100 may perform full body skeletal tracking of a person's body.

The tracking of one or more objects and/or points in relation to a person's body may be used by the system 100 in gesture recognition and so on.

Behavior analysis requires describing an event that occurs in the scene 140 using a meaningful symbology. An event may be something that occurs at a spatio-temporal instance or it may be a spatio-temporal sequence (a pattern of spatio-temporal instances over time). An event may relate to motion of an object (or person) or interaction of a person and object.

In some, but not necessarily all implementations, an event may be represented by a putative symbol defined in terms of parameters determined from the machine (computer) vision analysis and/or the spatial analysis. These parameters encode some or more of what is happening, where it is happening, when it is happening and who is doing it.

The recognition sub-module 126 is configured to recognize a putative symbol encoding an event in the scene 140 as a meaningful symbol associated with a particular meaning.

The recognition sub-module 126 may be configured to recognize a putative symbol, defined in terms of parameters determined from the machine (computer) vision analysis and/or the spatial analysis, and produced by the processing sub-module 124 as having meaning. The recognition sub-module 126 may, for example, store or access a database of meaningful reference symbols and may use a similarity test to determine whether a putative symbol is 'similar' to a meaningful symbol.

The recognition sub-module 126 may be configured as a machine (computer) inference engine or other recognition engine such as an artificial neural network or clustering in the parameter space. The recognition may sub-module 126, in some examples, be trained, via supervised learning, to recognize meaningful symbols as similar to reference symbols.

The control sub-module 128 responds to the determination that a meaningful event has occurred in the scene 140 in dependence on the event:
a) If the putative symbol is similar to a response symbol, the meaningful event is a 'response' event, and the control sub-module 126 performs a response action.

In some but not necessarily all examples the action performed may be programmed by a user. In some but not necessarily all examples the programming may occur via motion of the user within the scene. Examples of actions performed may be the generation of an alert or notification.

The alert or notification may be provided via the communications module 130. The communications module 130 may communicate wirelessly, via radio waves or via a wired connection to a local or remote apparatus. Examples of such apparatus include but are not limited to displays, televisions, audio output apparatus, personal devices such as mobile telephone or personal computers, a projector or other user output apparatus.

In some but not necessarily all examples the response symbol may be programmed by a user. For example, a user may be able to program or teach a meaningful event that is represented by a meaningful response symbol. The response symbol, created by the user, may be added to the database of reference symbols or otherwise used to recognize a putative symbol as a meaningful symbol. In some but not necessarily all examples the programming may occur via motion of the user within the scene 140. Examples of meaningful events that are represented by meaningful symbols include particular actions or movements performed such as user input gestures.

b) If the putative symbol is similar to a user control symbol, the meaningful event is a 'user control' event, and the control sub-module 126 enables user control of monitoring and/or user control of the response.

For example, a user may be able to program or teach a meaningful response symbol that is added to the database of reference symbols. In some but not necessarily all examples the programming may occur via motion of the user within the scene 140.

For example, a user may be able to program or teach an action performed when the putative symbol is matched to a response symbol. Examples of actions performed may be the generation of an alert or notification.

The operation of the processing module 120 may be further understood from Fig 2 which illustrates a state machine 200 for the processing module 120. The state machine 200 has a monitoring state 210, a user control state 220 and an automatic response state 230.

In the monitoring state 210, the sensors 110 provide sensor data 112, and the processing sub-module 124 automatically processes the sensor data 112 (video and/or audio and/or depth) to create scene data that has potential meaning. The recognition sub-module 126 automatically processes the scene data to identify actual meaning, that is meaningful symbols, within the scene data.

The meaningful symbols are predetermined, that is actions have occurred that determine a symbol prior to recognition. However, 'predetermined' should not be considered to mean exact or fixed. The symbol used for similarity matching merely has prior determination, it may dynamically evolve or may be fixed.

If the recognition sub-module 126 determines that a meaningful event has occurred in the scene 140, the control sub-module 126 responds automatically depending on the event. If the meaningful event is a 'response' event, then the state machine 200 transitions to the response state 230 and the control sub-module 126 performs a response action. The response action may be associated with the response event. If the event is a 'user control' event, then the state machine 200 transitions to the user control state 220 and user control of monitoring and/or response is enabled. The enablement may be in a manner associated with that user control state 220.

A particular gesture user input may be used as a 'user control' event. A gesture user input is a gesture that has meaning to the system 100 as a user input. A gesture may be static or moving. A moving gesture may comprise a movement or a movement pattern comprising a series of movements. For example it could be making a circling motion or a side to side or up and down motion or the tracing of a sign in space. A moving gesture may, for example, be an apparatus-independent gesture or an apparatus-dependent gesture. A moving gesture may involve movement of a user input object e.g. a user body part or parts, or a further apparatus, relative to the sensors 110. The body part may comprise the user's hand or part of the user's hand such as one or more fingers and thumbs. In other examples, the user input object may comprise a different part of the body of the user such as their head or arm. Three-dimensional movement may comprise motion of the user input object in any three orthogonal directions. The motion may comprise the user input object moving towards or away from the sensors 110 as well as moving in a plane parallel to the sensors or any combination of such motion. A gesture may be a non-contact gesture. A non-contact gesture does not contact the apparatus sensors at any time during the gesture. A gesture may be an absolute gesture that is defined in terms of an absolute displacement from the sensors 110. Such a gesture may be tethered, in that it is performed at a precise location in the scene space. Alternatively a gesture may be a relative gesture that is defined in terms of relative displacement during the gesture. Such a gesture may be un-tethered, in that it need not be performed at a precise location relative in the scene space and may be performed at a large number of arbitrary locations. A gesture may be defined as evolution of displacement, of a tracked point relative to an origin, with time. It may, for example, be defined in terms of motion using time variable parameters such as displacement, velocity or using other kinematic parameters. An un-tethered gesture may be defined as evolution of relative displacement Δd with relative time Δt. A gesture may be performed in one spatial dimension (1D gesture), two spatial dimensions (2D gesture) or three spatial dimensions (3D gesture).

In some examples, the system 100 may track one or more objects and/or points in relation to a person's body in gesture recognition. For example, the system 100 may perform full skeletal tracking of a person's body in gesture recognition.

Implementation of the processor module 120 or part of the processor module 120 may be as controller circuitry. The controller circuitry 120 may be implemented in hardware alone, have certain aspects in software including firmware alone or can be a combination of hardware and software (including firmware).

As illustrated in Fig 3 the controller 120 may be implemented using instructions that enable hardware functionality, for example, by using executable computer program instructions 322 in a general-purpose or special-purpose processor 310 that may be stored on a computer readable storage medium (disk, memory etc) to be executed by such a processor 310.

The processor 310 is configured to read from and write to the memory 320. The processor 310 may also comprise an output interface via which data and/or commands are output by the processor 310 and an input interface via which data and/or commands are input to the processor 310.

The memory 320 stores a computer program 322 comprising computer program instructions (computer program code) that controls the operation of the processing module 120 when loaded into the processor 310. The computer program instructions, of the computer program 322, provide the logic and routines that enables the processing module to perform the methods discussed with reference to the Figs. The processor 310 by reading the memory 320 is able to load and execute the computer program 322.

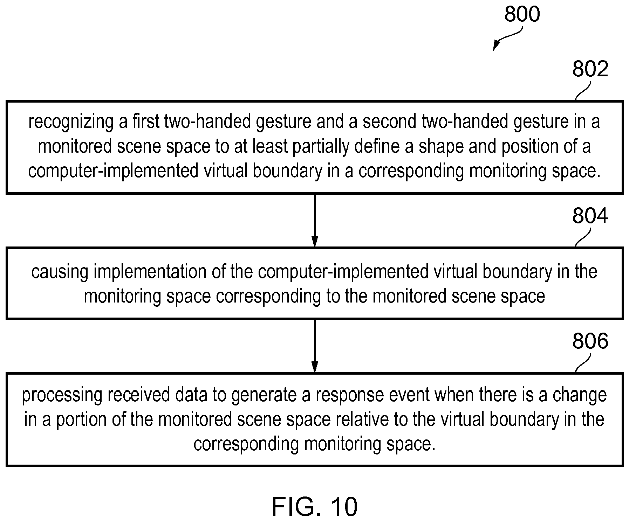

The system 100 may therefore comprise an apparatus 120 that comprises:
at least one processor 310; and at least one memory 320 including computer program code 322 the at least one memory 320 and the computer program code 322 configured to, with the at least one processor 310, cause the apparatus 120 at least to perform one or more of blocks 124, 126, 128 of Fig 1 and/or one or more of the blocks of Fig 10.

As illustrated in Fig 4, the computer program 322 may arrive at such an apparatus via any suitable delivery mechanism 324. The delivery mechanism 324 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 322. The delivery mechanism may be a signal configured to reliably transfer the computer program 322. The apparatus 120 may propagate or transmit the computer program 322 as a computer data signal.

Although the memory 320 is illustrated as a single component/circuitry it may be implemented as one or more separate components/circuitry some or all of which may be integrated/removable and/or may provide permanent/semi-permanent/ dynamic/cached storage.

Although the processor 310 is illustrated as a single component/circuitry it may be implemented as one or more separate components/circuitry some or all of which may be integrated/removable. The processor 310 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks 124, 126, 128 illustrated in the Fig 1 and/or the blocks illustrated in Fig 10 may represent steps in a method and/or sections of code in the computer program 322. The illustration of a particular order to the blocks does not necessarily imply that there is a required or preferred order for the blocks and the order and arrangement of the block may be varied. Furthermore, it may be possible for some blocks to be omitted.

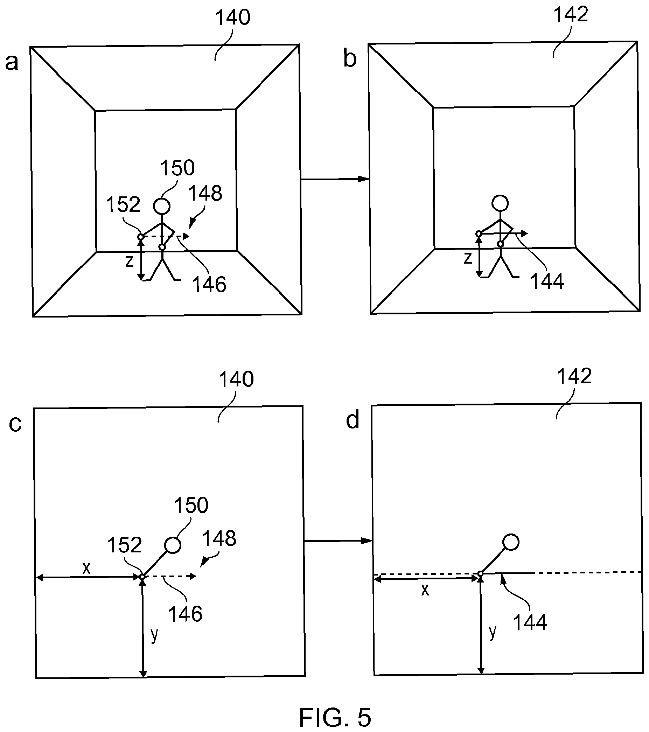

Fig 5 illustrates an example of operation of the system 100. Part a in the example of Fig 5 illustrates a scene 140. The scene 140 is a real-world scene. The scene 140 comprises a three-dimensional space and may therefore be considered a scene space 140. The scene space 140 is monitored by the system 100. The scene space may therefore be considered a monitored scene space 140. In the example of Fig 5 the monitored scene space 140 is a room comprising four walls, a ceiling and a floor.

In some examples the monitored scene space 140 may comprise no boundaries. Additionally or alternatively in examples the monitored scene space 140 may comprise a plurality of rooms that may or may not be spatially connected.

In the example of Fig 5 a person 150 is standing in the monitored scene space 140. The person 150 is performing at least one gesture user input 146 to define at least one computer-implemented virtual boundary 144. The gesture user input 146 may be referred to as a gesture 146 and may be as described above with reference to Fig 2. The gesture 146 may be considered a boundary indication gesture 146.

### GESTURE-DEFINED BOUNDARY

In the illustrated example the person 150 is performing a gesture 146 to define a single computer-implemented virtual boundary 144.

The gesture 146 comprises movement of one or more user input objects, which may be body parts. In the example of Fig 5 the gesture 146 comprises the person 150 moving 148 one or more user input objects 152.

In examples, the movement 148 may comprise any motion in one spatial dimension, two spatial dimensions or three spatial dimensions and may take any form.

Part c of the example of Fig 5 illustrates an overhead view of the monitored scene space 140 in which the person 150 is illustrated making the gesture 146 to define a computer-implemented virtual boundary 144.

As can be seen in parts a and c of the example of Fig 5, the gesture 146 has a position having Cartesian orthogonal coordinates (xᵢ(t), yᵢ(t), zᵢ(t)) in the scene 140 for each user input object i, at time t . In this example, xᵢ(t) is measured from the left wall, yᵢ(t) is measured from the front wall and zᵢ(t) is measured from the floor. It will be understood that other coordinate systems may be used and that different orientations of the Cartesian coordinate system may be used

For simplicity of illustration in Fig 5, the gesture 146 comprises motion of one user input object 152 in one spatial dimension- as the value of x changes and the values of y and z remain constant. In other examples the values of x, y and/or z may vary in any way with movement 148 from any starting position in the monitored scene space 140. Also multiple user input objects may be used.

In other examples, more than one user input object 152 may be used simultaneously.

Parts b and d of the example of Fig 5 illustrate a monitoring space 142 that corresponds to the monitored scene space 140 (a corresponding monitoring space 142). The monitoring space 142 comprises a virtual representation of the monitored scene space 140 created and used by the system 100. The monitoring space 142 may be formed, for example, from data received by the sensors 110, such as received image data and/or depth data.

Parts b and d illustrate respectively the same views as illustrated in parts a and c of Fig 5.

In some examples the system 100 may use information of the geometry of the monitored scene space 140 to form the monitoring space 142. For example, the system 100 may use a three dimensional model of the monitored scene space 140 in the formation of the monitoring space 142. The three dimensional model of the monitored scene space 140 may be created by the system 100 and/or may be received by the system 100. Methods for creating a three dimensional model of the monitored scene space 140 are known in the art.

The system 100 may use the monitoring space 142 to monitor the scene space 140. For example, the system may use the monitoring space 142 to implement and monitor at least one virtual boundary 144.

As indicated by the arrows between parts a and b and parts c and d of Fig 5 there is a correspondence between the monitoring space 142 and the monitored scene space 140. In some examples there may be a one to one mapping between the monitoring space 142 and the monitored scene space 140.

In other examples there may be a scale invariant transformation between the monitored scene space 140 and the monitoring space 142.

The system 100 recognizes the gesture 146 performed by the person 150 and in response implements at least one virtual boundary 144 in the monitoring space 142.

In some examples, recognizing the gesture 146 may comprise processing received data, such as image data. For example, the system 100 may analyze one or more video feeds.

In examples, a shape and position of the computer-implemented virtual boundary 144 in the monitoring space is determined, at least partially, by the gesture 146 in the monitored scene space 140 and the computer-implemented virtual boundary 144 is located in the monitoring space at a corresponding location equivalent to the location of the gesture 146 in the monitored scene space 140.

The gesture 146 may be an absolute gesture or tethered gesture as described above in relation to Fig 2.

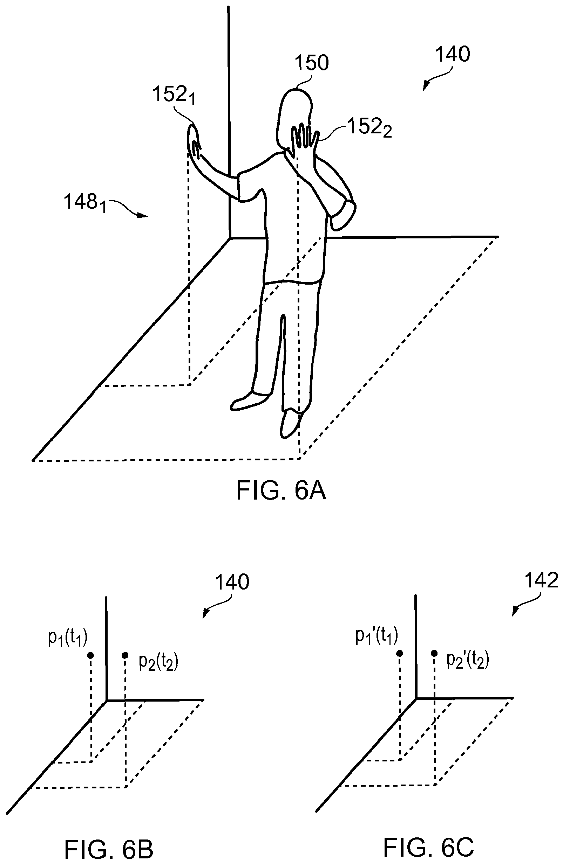

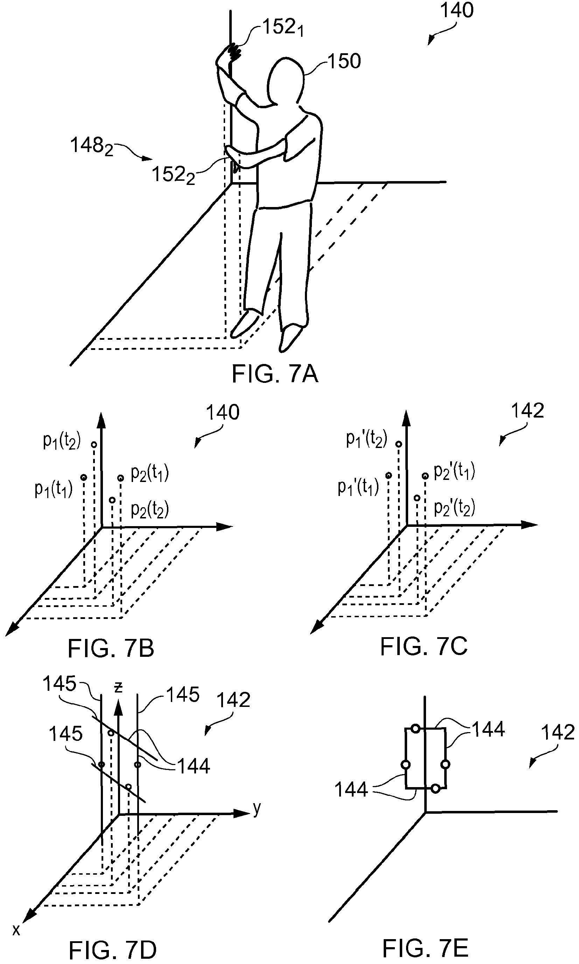

Referrin to Fig 6A 6B, 6C and Fig 7A 7B, 7C and 7D the aesture 148 comprises a first two-handed gesture 148₁ and the second two-handed gesture 148₂ in the monitored scene space 140. Fig 6A illustrates one example of a first two-handed gesture 148₁ in the monitored scene space 140. Fig 7A illustrates one example of a second two-handed gesture 148₂ in the monitored scene space 140.

In these figures, a point pₙ(tₓ) refers to a point in the monitored scene space 140 associated with a particular time tₓ, where different x label different times, and associated with a particular user input device 152ₙ (in this example a particular hand) where the same n is used to consistently label the same user input device 152ₙ and different n are used for different user input devices.

In these figures, a point pₙ'(tₓ) refers to a point in the monitoring space 142 corresponding to a particular point pₙ(tₓ) in the monitored scene space 140, where the same label n is used consistently in both spaces to label corresponding points and the label x is used consistently in both spaces to label the time of correspondence.

The first two-handed gesture 148₁ and the second two-handed gesture 148₂ in the monitored scene space 140 at least partially define a shape and position of the computer-implemented virtual boundary 144 in the corresponding monitoring space 142.

As illustrated in Fig 6B, the first two-handed gesture 148₁ in a monitored scene space 140 defines, at time t₁, first two points p₁(t₁), p₂(t₁) in the monitored scene space 140. As illustrated in Fig 6B, the first two points p₁(t₁), p₂(t₁) in the monitored scene space 140 determine corresponding first two points p₁'(t₁), p₂'(t₁) in the monitoring space 142. Thus, the first two-handed gesture 148₁ in the monitored scene space 140 (Fig 6A) specifies the first two points p₁'(t₁), p₂'(t₁) in the monitoring space 142 (Fig 6C).

As illustrated in Fig 7B, a second two-handed gesture 148₂ in the monitored scene space 140 defines, at time t₂, second two points p₁(t₂), p₂(t₂) in the monitored scene space 140. The second two points p₁(t₂), p₂(t₂) in the monitored scene space 140 determine corresponding second two points p₁'(t₂), p₂'(t₂) in the monitoring space 142. Thus, the second two-handed gesture 148₂ in the monitored scene space 140 specifies the second two points p₁'(t₂), p₂'(t₂) in the monitoring space 142.

The mapping M that maps the monitored scene space 140 to the monitoring space 142 also maps the first two points p₁(t₁), p₂(t₁) in the monitored scene space 140 to the corresponding first two points p₁'(t₁), p₂'(t₁) in the monitoring space 142 and maps the second two points p₁(t₂), p₂(t₂) in the monitored scene space 140 to the corresponding second two points p₁'(t₂), p₂'(t₂) in the monitoring space 142.

The computer-implemented virtual boundary 144 in the monitoring space 142 has a shape and position that is at least partially defined by the first two points p₁'(t₁), p₂' (t₁) in the monitoring scene space 140 and the second two points p₁'(t₂), p₂'(t₂) in the monitoring space 142.

The process of recognizing the first two-handed gesture 148₁ and the second two-handed gesture 148₂ may comprise processing received image data and/or received depth data to track motion of parts of the user's body in the scene space. A two-handed gesture may be a gesture that involves relative movement of both hands of one person, each hand movement being relative to one or more of: a wrist joint and/or an elbow joint and/or a shoulder joint for that hand. The point pₙ(tₓ) may refer to a point in the monitored scene space 140 associated with a hand or a joint or have some predetermined relationship to a hand or joint.

In the example described, a first hand 152₁ of the first two-handed gesture 148₁ specifies one of the first two points p₁'(t₁) in the monitoring space 142 defining the at least one computer-implemented virtual boundary 144, a second hand 152₂ of the first two-handed gesture 148₁ specifies one of the first two points p₂'(t₁) in the monitoring space 142 defining the at least one computer-implemented virtual boundary 144, a first hand 152₁ of the second two-handed gesture 148₂ specifies one of the second two points p₁'(t₂) in the monitoring space 142 defining the at least one computer-implemented virtual boundary 144, and the second hand 152₂ of the second two-handed gesture 148₂ specifies one of the second two points p₂'(t₂) in the monitoring space 142 defining the at least one computer-implemented virtual boundary 144.

In the example illustrated in Fig 7D and 7E, the computer-implemented virtual boundary 144 in the monitoring space passes through each of the points p₁'(t₁), p₂'(t₁), p₁'(t₂), p₂'(t₂). Therefore some or all of a line between the first two points p₁'(t₁), p₂'(t₁), in the monitoring space 142 is within a space demarcated by the computer-implemented boundary 144 and some or all of a line between the second two points p₁'(t₂), p₂'(t₂) in the monitoring space 142 is within the space demarcated by the computer-implemented boundary 144.

The computer-implemented boundary 144 may, for example, be an N-sided polygon having N vertices. The first two points p₁'(t₁), p₂'(t₁), in the monitoring space 142 may define positions of two vertices or two sides of the N-sided polygonal boundary 144 in the monitoring space 142 and the second two points p₁'(t₂), p₂'(t₂), in the monitoring space 142 may define positions of two different vertices or two different sides of the N-sided polygonal boundary 144 in the monitoring space 142.

In the example illustrated in Fig 7D and 7E, the first two points p₁'(t₁), p₂'(t₁) in the monitoring space 142 define positions of two opposing sides of a rectangular boundary 144 in the monitoring space 142 and the second two points p₁'(t₂), p₂'(t₂) in the monitoring space 142 define positions of two different opposing sides of the rectangular boundary 144.

In other examples, additional two-handed gestures 148ₘ may be used to specify additional points pₘ'(tₓ) in the monitoring space 142 defining positions of two different vertices or two different sides of the N-sided polygonal boundary 144 in the monitoring space 142.

The computer-implemented virtual boundary 144 may be one dimensional (e.g. a curved or rectilinear line of limited or infinite length), two dimensional (e.g. a curved or flat plate of limited or infinite extension) or three dimensional (e.g. a volume).

Referring to Fig 7D, let us define a constraint unit vector **c.** The constraint unit vector **c** may, for example, have a default value or it may be user determined. For example, in Fig 6A the user's hands 152₁ and 152₂ are both oriented (direction of fingers) in a direction given by unit vector **h** and **c** may be set equal to **h**. In Fig 6A, **h** is vertical. In an alternative example, c may be set equal to **-Δp(tz)'** where **Δp(tz)'** is the unit vector from points p₁'(t₂) to pz' (t₂), **Δp(t₂)'** is in the direction **p₂'(t₂)** - **p₁'(t₂)**. In an alternative example, **c** may be, by default, vertical (0, 0, 1).

If the boundary 144 is two-dimensional and lies in a boundary plane defined by a normal unit vector **n**, then if **Δp(t₁)'** is the unit vector from points P₁'(t₁) to p₂' (t₁), **Δp(t₁)'** is in the direction **p₂'(t₁)** - **p₁'(t₁),** and, then **c** curl **Δp(t₁)' = n** , i.e. both_**n** and **Δp(t₁)'** lie in the boundary plane. This may alternatively be stated as the boundary plane is parallel to **c** (for example, vertical in the Fig 7D) and the points p₁(t₁) and p₂(t₁) lie in the boundary plane. The points p₁(t₁) and p₂(t₁) determine the position of the boundary plane and constrain the orientation of the plane in one dimension. The unit vector c constrains the orientation of the boundary plane in the second dimension fixing its orientation. The boundary 144 is then determined as lying within the boundary plane and passing through the points p₁'(t₁), p₂'(t₁), p₁'(t₂) and p₂'(t₂).

In the example illustrated in Fig 7D, the two boundary lines 145 passing through p₁'(t₁), p₂'(t₁) are parallel to c and orthogonal to **Δp(t₁)'** and the two boundary lines 145 passing through p₁'(t₂), p₂'(t₂) are orthogonal to **c** and parallel to **Δp(t₁)'**. The boundary 144 is determined as the closed circuit formed by the intersecting boundary lines 145, which in this example is a rectangle, for example, as illustrated in Fig 7E.

If the boundary 144 is three-dimensional, then a process similar to that described above may be used. However, boundary planes may be used instead of boundary lines. For example, the two boundary planes passing through p₁'(t₁), p₂'(t₁) are parallel to c and orthogonal to **Δp(t₁)'** and the two boundary planes passing through p₁'(t₂), p₂'(t₂) are orthogonal to c and parallel to **Δp(t₁)'**. The boundary 144 is determined as the closed circuit formed by the intersecting boundary planes, which in this example would be a rectangular tube or cuboid assuming the boundary is terminated at the edge of the monitoring space 142.

The computer-implemented virtual boundary 144 may be one, two or three dimensional.

A user may initiate a computer-implemented virtual boundary definition process by performing a particular gesture, for example, by raising his hands (palms open) as seen in Figure 6A. The system may acknowledges this action, e.g. with a sound, voice message or a notification which is sent to a mobile device (e.g., sound or vibration). The mobile device can be, for example, the user's mobile phone, smart watch, smart eyewear, or other smart clothing.

After the system has acknowledged that a computer-implemented virtual boundary 44 can now be defined, the raised hands may be used for specifying a direction of a computer-implemented virtual boundary plane using a first two-handed gesture 148₁. In the example of Fig 6A, it may be assumed or determined, that a computer-implemented virtual boundary plane is vertical, i.e., perpendicular to the ground, the user may adjust the position and orientation of the plane moving his/her hands to the first two points p₁(t₁), p₂(t₁) in the monitored scene space 140 which determine the corresponding first two points p₁'(t₁), p₂'(t₁) in the monitoring space 142. The system may acknowledged, as described above, that the first two points p₁(t₁), p₂(t₁) have been defined. In the example of Fig 7D, defining the first two points p₁(t₁), p₂(t₁) implicitly defines the lateral sides of a rectangular boundary 144 - one side passes through each hand.

After the system acknowledgment, if any, the user may move his/her raised hands to perform a second two-handed gesture 148₂ that defines the second two points p₁(t₂), p₂(t₂) in the monitored scene space 140 which determine the corresponding second two points p₁'(t₂), p₂'(t₂) in the monitoring space 142. The system may acknowledged, as described above, that the second two points p₁(t₂), p₂(t₂) have been defined. In the example of Fig 7D, defining the second two points p₁(t2), p₂(t₂) implicitly defines the top and bottom of a rectangular boundary 144 - the top passes through the top hand and the bottom passes through the bottom hand.

The system may time out and end the virtual boundary definition process if the first two-handed gesture 148₁ is not performed with a timeout period of initiation or acknowledgement of initiation. The system may time out and end the virtual boundary definition process if the second two-handed gesture 148₂ is not performed within a timeout period of the first two-handed gesture 148₁ or its acknowledgement. The system may time out and end the virtual boundary definition process if the user lowers both hands.

In order to clearly distinguish when the first two-handed gesture 148, has been performed, a transition gesture may be performed immediately. The transition gesture indicates that the first two points p₁(t₁), p₂(t₁) have been defined and the following two-handed gesture is the second two-handed gesture 148₂ defining the second two points p₁(t₂), p₂(t₂). Any suitable gesture may be used. One example is changing the first two-handed gesture 148₁ from a palm-open gesture to a fist clenched gesture. This transition gesture involves the user clenching his or her fists without changing the positions of the hands. The transition gesture operates as an interrupt, allowing the second two-handed gesture to be recognized distinctly from the first two-handed gesture and may, in some examples, be performed without the changing the positions of his/her hands.

### EXTENSION

The boundary definition process using a first two-handed gesture 148₁ and a second two-handed gesture 148₂ as described above and in relation to Fig 6A-6C and 7A-7E, may be adapted to extend the computer-implemented virtual boundary 144 so that a two-dimensional boundary 144 is not defined by boundary lines 145 within the boundary plane but by boundary areas within the plane boundary and so that a three-dimensional boundary 144 is not defined by boundary planes orthogonal to the boundary plane but by boundary volumes.

For example, the boundary 144 by may be extended:
from p₂(t₁) in a direction + **Δp(t₁)'**
from p₁(t₁) in a direction - **Δp(t₁)',**
from p₁(t₂) in a direction **c** and/or
from p₂(t₂) in a direction **-c.**

The interior dimensions of the boundary 144 remain defined by the points p₁'(t₁), p₂'(t₁), p₁'(t₁), p₂'(t₂) but one or more exteriors dimensions of the extended boundary are defined by one or more extension gestures.

As an example, a single extension gesture may extend an exterior dimension of the boundary 144 from p₂(t₁) in a direction **+Δp(t₁)'**, from p₁(t₁) in a direction - **Δp(t₁)'**, from p1(t₂) in a direction **c** and from p₂(t₂) in a direction **-c.** The interior dimensions of the boundary 144 remaining defined by the points p₁'(t₁), p₂'(t₁), p₁'(t₁), p₂'(t₂).

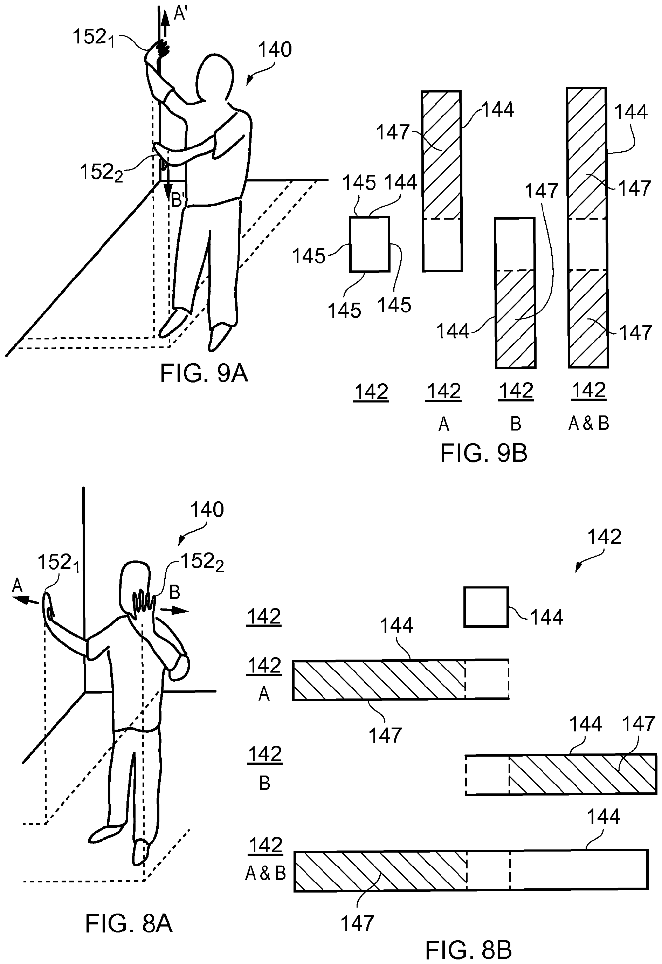

As another example, an extension gesture may be performed by extending a two-handed gesture. The extension gesture may be performed in some examples after the system has acknowledged the two-handed gesture The effect of the extension gesture is to extend the boundary line 145 to a boundary area 147 (or boundary plane to a boundary volume) in a direction defined by the extension gesture. The boundary 144 maintains interior dimensions defined by the points p₁'(t₁), p₂'(t₁), p₁'(t₂), p₂'(t₂) but has an exterior dimension defined at least partly by the extension gesture. Examples are provided in Figs 8A, 8B, 9A, 9B.

Fig 8A illustrates an extension of the first two-handed gesture 148₁. After the first two-handed gesture 148₁, one or more extension gestures A, B may be performed.

A first extension gesture A may be performed by moving the first hand 152₁ and first point p₁(t₁).In the example illustrated, the first hand 152₁ is moved rapidly rightwards before the second two-handed gesture 148₂ is performed. The extension gesture A may be performed in some examples after the system has acknowledged the first two-handed gesture 148₁.

As illustrated in Fig 8B, the boundary 144 ultimately defined by the combination of the first two-handed gesture 148₁, the extension gesture A and the second two-handed gesture 148₂ is the same as the boundary 144 that would have been defined by the combination of only the first two-handed gesture 148, and the second two-handed gesture 148₂ (without the extension gesture A) except that the boundary line 145 defined by the first point p₁(t₁)/first hand 152₁ has been changed from a boundary line 145 to a boundary area 147 that extends from the boundary line 145 comprising the first point p₁(t₁) in the direction the first hand 152₁ was moved during the extension gesture A. The boundary 144 therefore has interior dimensions defined by the points p₁'(t₁), p₂'(t₁), p₁'(t₂), p₂'(t₂) as previously but has an exterior dimension defined at least partly by the extension gesture A.

A second extension gesture B may be performed by moving the second hand 152₂ and first point p₂(t₁).In the example illustrated, the second hand 152₂ is moved rapidly leftwards before the first two-handed gesture 148₂ is performed. The extension gesture may be performed in some examples after the system has acknowledged the first two-handed gesture 148₁.

As illustrated in Fig 8B, the boundary 144 ultimately defined by the combination of the first two-handed gesture 148₁, the extension gesture B and the second two-handed gesture 148₂ is the same as the boundary 144 that would have been defined by the combination of only the first two-handed gesture 148, and the second two-handed gesture 148₂ (without the extension gesture B) except that the boundary line 145 defined by the first point p₂(t₁)/second hand 152₂ has been changed from a boundary line 145 to a boundary area 147 that extends from the boundary line 145 comprising the first point p₂(t₁) in the direction the second hand 152₂ was moved during the extension gesture B. The boundary 144 therefore has interior dimensions defined by the points p₁'(t₁), p₂'(t₁), p₁'(t₂), p₂'(t₂) as previously but has an exterior dimension defined at least partly by the extension gesture B.

A first and second extension gestures A and B may be performed simultaneously.

As illustrated in Fig 8B, the boundary 144 ultimately defined by the combination of the first two-handed gesture 148₁, the extension gesture A and the extension gesture B and the second two-handed gesture 148₂ is the same as the boundary 144 that would have been defined by the combination of only the first two-handed gesture 148, and the second two-handed gesture 148₂ (without the extension gestures A and B) except that the boundary line 145 defined by the first point p₂(t₁)/second hand 152₂ has been changed from a boundary line 145 to a boundary area 147 that extends from the boundary line 145 comprising the first point p₂(t₁) in the direction the second hand 152₂ was moved during the extension gesture B and except that the boundary line 145 defined by the first point p₁(t₁)/first hand 152₁ has been changed from a boundary line 145 to a boundary area 147 that extends from the boundary line 145 comprising the first point p₁(t₁) in the direction the first hand 152₁ was moved during the extension gesture A. The boundary 144 therefore has interior dimensions defined by the points p₁'(t₁), p₂'(t₁), p₁'(t₂), p₂'(t₂) as previously but has an exterior dimension defined at least partly by the extension gestures A and B.

Fig 9A illustrates an extension of the second two-handed gesture 148₂. After the second two-handed gesture 148₂, one or more extension gestures A', B' may be performed.

A first extension gesture A' may be performed by moving the first hand 152, and second point p₁(t₂). In the example illustrated, the first hand 152₁ is moved rapidly upwards after the second two-handed gesture 148₂ is performed. The extension gesture A' may be performed in some examples after the system has acknowledged the second two-handed gesture 148₂.

As illustrated in Fig 9B, the boundary 144 ultimately defined by the combination of the first two-handed gesture 148₁, the second two-handed gesture 148₂ and the extension gesture A' is the same as the boundary 144 that would have been defined by the combination of only the first two-handed gesture 148, and the second two-handed gesture 148₂ (without the extension gesture A') except that the boundary line 145 defined by the second point p₁(t₂)/first hand 152₁ has been changed from a boundary line 145 to a boundary area 147 that extends from the boundary line 145 comprising the second point p₁(t₂) in the direction the first hand 152₁ was moved during the extension gesture A'. The boundary 144 therefore has interior dimensions defined by the points p₁'(t₁), p₂'(t₁), p₁'(t₂), p₂'(t₂) as previously but has an exterior dimension defined at least partly by the extension gesture A'.

A second extension gesture B' may be performed by moving the second hand 152₂ and second point p₂(t₂). In the example illustrated, the second hand 152₂ is moved rapidly downwards after the second two-handed gesture 148₂ is performed. The extension gesture B' may be performed in some examples after the system has acknowledged the second two-handed gesture 148₁.

As illustrated in Fig 9B, the boundary 144 ultimately defined by the combination of the first two-handed gesture 148₁, the second two-handed gesture 148₂ and the extension gesture B' is the same as the boundary 144 that would have been defined by the combination of only the first two-handed gesture 148, and the second two-handed gesture 148₂ (without the extension gesture B') except that the boundary line 145 defined by the second point p₂(t₂)/second hand 152₂ has been changed from a boundary line 145 to a boundary area 147 that extends from the boundary line 145 comprising the second point p₂(t₂) in the direction the second hand 152₂ was moved during the extension gesture B'. The boundary 144 therefore has interior dimensions defined by the points p₁'(t₁), p₂'(t₁), p₁'(t₂), p₂'(t₂) as previously but has an exterior dimension defined at least partly by the extension gesture B'.

The first and second extension gestures A' and B' may be performed simultaneously.

As illustrated in Fig 9B, the boundary 144 ultimately defined by the combination of the first two-handed gesture 148₁, the second two-handed gesture 148₂ and both the extension gesture A' and the extension gesture B' and is the same as the boundary 144 that would have been defined by the combination of only the first two-handed gesture 148₁ and the second two-handed gesture 148₂ (without the extension gestures A' and B') except that the boundary line 145 defined by the second point p₂(t₂)/second hand 152₂ has been changed from a boundary line 145 to a boundary area 147 that extends from the boundary line 145 comprising the second point p₂(t₂) in the direction the second hand 152₂ was moved during the extension gesture B' and except that the boundary line 145 defined by the second point p₁(t₂)/first hand 152₁ has been changed from a boundary line 145 to a boundary area 147 that extends from the boundary line 145 comprising the second point p₁(t₂) in the direction the first hand 152₁ was moved during the extension gesture A'. The boundary 144 therefore has interior dimensions defined by the points p₁'(t₁), p₂'(t₁), p₁'(t₂), p₂'(t₂) as previously but has an exterior dimension defined at least partly by the extension gestures A' and B'.

It is also possible to extend the first two-handed gesture 148₁ as described above and also extend the second two-handed gesture 148₂ during the same gesture 148 defining the boundary 144. In this example, the extension applied by the second two-handed gesture 148₂ may be applied to the extended boundary defined by the first two-handed gesture 148₂. If the extension gesture A' is performed, the boundary line 145 defined by the second point p₁(t₂)/first hand 152₁ is changed from a boundary line 145 to a boundary area 147 that extends from the boundary line 145 comprising the second point p₁(t₂) in the direction the first hand 152₁ was moved during gesture A' (+c) and any boundary areas 147 defined by the preceding first two-handed gesture 148₂ is also extended in the direction the second hand 152₂ was moved during gesture A' (+c). If the extension gesture B' is performed, the boundary line 145 defined by the second point p₂(t₂)/second hand 152₂ is changed from a boundary line 145 to a boundary area 147 that extends from the boundary line 145 comprising the second point p₂(t₂) in the direction the second hand 152₂ was moved during gesture B' (-c) and any boundary areas 147 defined by the preceding first two-handed gesture 148₂ is also extended in the direction the second hand 152₂ (-c). The boundary 144 therefore has interior dimensions defined by the points p₁'(t₁), p₂'(t₁), p₁'(t₁), p₂'(t₂) as previously but has an exterior dimension defined at least partly by the extension of both the first two-handed gesture 148₁ and second two-handed gesture 148₂.

It will be understood from the foregoing that a depth/area of the virtual boundary can be extended outwards from one or more of the first two points p₁'(t₁), p₂'(t₁), and the second two points p₁'(t₂), p₂'(t₂), towards one or more limits of the monitoring space 142.

The size of the extension may be controlled via the extension gestures A, B, A', B'.

If the extension gesture is a movement that stops at a point q and the displacement of the hand by the movement does not exceed a threshold value, then the exterior perimeter of the boundary area 144 is extended only to a point corresponding to point p in the monitoring space 142.

If the extension gesture is a movement that does not stop within the threshold value, then the exterior perimeter of the boundary area 144 is extended to the limits of the monitoring space 142.

The user is thus able to control the position and size of the boundary 144.

The user may, for example, create a boundary 144 to cover individual objects such, for example, a microwave oven at home.

### FEEDBACK

The system 100 may provide feedback to a user to confirm that the system 100 has recognized a gesture 146 and has implemented the virtual boundary 144. The feedback may comprise any suitable feedback, for example audio and/or visual and/or tactile feedback and so on. Additionally or alternatively the system 100 may send one or more messages to a device or devices to inform the user that the system 100 has implemented the virtual boundary 144.

### RESPONSE EVENT

The system 100, may process received data to generate a response event when there is, relative to the at least one virtual boundary 144, a change in a portion of the monitored scene space 140 that causes a change in a portion of the monitoring space 142 demarcated by the virtual boundary.

For example, the system 100 may process data received by the sensors 110, such as audio and/or image data, to generate the response event. The system may analyze one or more audio and/or video feeds to generate the response event. In some examples processing the received data to generate the response event may be considered monitoring the virtual boundary 144.

In examples the same sensor, such as a camera, may be used in recognition of the gesture 146 defining the at least one virtual boundary 144 and for monitoring the at least one virtual boundary 144.

In some examples, processing received data to generate the response event may comprise processing received data to monitor the virtual boundary 144 to detect activity across the virtual boundary 144 and/or activity within a threshold of the virtual boundary 144. For example, the system 100 may process audio and/or image and/or depth data to monitor the virtual boundary 144 to detect activity across the virtual boundary 144 or within a threshold of the virtual boundary 144.

### VERIFICATION

The system 100 may allow a user to verify that the one or more virtual boundaries 144 have been implemented without generating a response event.

For example, the a user may define a computer-implemented virtual boundary 144 using a gesture 146 at a location in the monitored scene space 140 and may then interact with the location in the monitored scene space 140 to verify that the virtual boundary 144 is "in place". In examples the user may move at least a part of his body, such as his hand, through the location in the monitored scene space and the system 100 may provide feedback to confirm that the user has touched and/or crossed the virtual boundary 144. Any suitable feedback may be provided, for example, audio and/or visual and/or tactile feedback. Additionally or alternatively the system 100 may send at least one message to a device or devices of the user.

In examples the system 100 may begin to process received data to generate the response event after the user has verified the virtual boundary 144. For example, the system 100 will not generate an alert and/or increment a counter until after the user has verified the virtual boundary 144.

### RESPONSE EVENT

The response event may comprise providing feedback, for example using the communication module 130. In some examples the feedback may comprise one or more alerts. The one or more alerts may comprise any form of alert such as audio and/or visual alerts. Additionally or alternatively, the feedback may comprise providing one or more messages to an apparatus such as a mobile telephone, tablet, laptop computer, desktop computer and so on.

In some examples, the response event may additionally or alternatively comprise incrementing a counter. For example, the system 100 may monitor the number of times there is a boundary interaction such as an object 152 touching and/or crossing and/or approaching within a threshold of the virtual boundary 144. In addition or alternatively the system 100 may monitor the direction of boundary interactions, such as the direction of boundary crossings. The system 100 may be configured to provide statistics on boundary interactions.

In some examples the system 100 may be used to monitor how often an elderly person goes to the bathroom and/or medicine cabinet, how often a child or children access or go near a refrigerator, monitoring people in a public space and so on.

A user of the system 100, such as person 150, may configure the response event. For example, a user may perform one or more additional gestures 146 that are recognized by the system 100 to configure the response event. In addition or alternatively the user may provide input to the system 100 to configure the response event using a device such as a tablet or mobile phone.

The system 100, in some examples, may process received data to generate a response event when there is, relative to the virtual boundary 144, a change in a portion of the monitored scene space 140 in relation to any object 152. For example, the system may generate a response event when any object 152 crosses, touches and/or comes within a threshold of the virtual boundary 144. Such virtual boundaries 144 may be considered general virtual boundaries 144.

In other examples, the system may process received data to generate a response event when there is, relative to the virtual boundary 144, a change in a portion of the monitored scene space 140 in relation to one or more user specified objects 152.

### OBJECT SPECIFICATION

For example, after performing the gesture 146 to define at least one virtual boundary 144, a user 150 of the system 100 may perform a gesture 146 to indicate to the system 100 one or more objects 152. For example, the user 150 may point to the one or more objects 152 using his hand or a mobile device and/or may position the object or objects in a viewfinder of a device.

In other examples, the gesture 146 indicating the one or more objects may be performed before the gesture 146 defining the virtual boundary 144.

The system 100 may recognize the gesture 146 indicating the one or more objects 152 and in response the system 100 may generate a response event only when there is a change in a portion of the monitored scene space 140, relative to the virtual boundary 144, in relation to the indicated objects 152. For example, the system 100 may generate a response event only when one of the indicated objects 152 crosses, touches and/or comes within a threshold of the virtual boundary 144. Such virtual boundaries 144 may be considered object specific virtual boundaries.

With reference to the preceding examples, the person 150 may perform the gesture 146 to define the virtual boundary 144 and the system 100 may recognize the gesture 144 and implement the virtual boundary 144.The person 150 may then perform a further gesture, such as pointing to himself. The system recognizes the further gesture and monitors the virtual boundary 144 only in relation to the person 150. For example, the system 100 may generate a response event such as an alert and/or increment a counter when the person 150 crosses, touches and/or comes within a threshold of the virtual boundary 144 but not when any other object 150 crosses, touches and/or comes within threshold of the virtual boundary 144.

### BOUNDARY CHANGE

After one or more virtual boundaries 144 have been implemented a user, such as person 150, may perform a gesture 146 to change the one or more virtual boundaries 144. Additionally or alternatively a user may provide input to change the virtual boundary using a mobile device.

The system 100 may recognize the gesture 146 and in response may change the one or more virtual boundaries 144. Any characteristic of a computer-implemented virtual boundary 144 may be changed in this way. For example a user may perform a gesture 146 to change one or more of the location, shape, size, height of the virtual boundary and so on. In examples there may be any number of different gestures 146 to change the virtual boundary 144.

The change may be temporary and the system 100 may revert the virtual boundary 144 to its original state after a time. The amount of time may be predefined or may be configured by a user, for example using a gesture and/or one or more other inputs.

After the user has performed the gesture 146 to define the virtual boundary 144, and the system has implemented the virtual boundary 144, the user may make a grabbing motion in the vicinity of the monitored scene space 140 corresponding to the location of the virtual boundary 146 in the monitoring space 142.

In some examples, the system 100 may be equipped with one or more projectors and/or lasers configured to project the virtual boundary 144 in the monitored scene space 140 using augmented reality techniques. Additionally or alternatively the user may observe the virtual boundary using augmented reality on one or more devices such as glasses.

The system 100 recognizes the grabbing gesture and its location proximate to the virtual boundary 144 and moves the virtual boundary in the monitoring space 142 in correspondence with the movement of the person's hands in the monitored scene space 140 while the person continues to grab. When the person 150 releases the "grab" gesture the system 100 implements the virtual boundary 144 at the new location.

In some examples a user may change a computer-implemented virtual boundary 144 to temporarily allow for boundary interaction(s) such as approaching, touching and/or crossing of the computer-implemented virtual boundary 144 without generating the response event. This may be done using a gesture 146 and/or one or more additional inputs.

In some examples a user, such as person 150, may perform a gesture 146 and the system 100 recognizes the gesture 146. In response the system 100 temporarily allows for one or more objects 152, such as person 150, to approach, touch and/or cross the computer-implemented virtual boundary without generating a response event. In examples, the change may be spatially temporary and the system 100 may allow a number of approaches/touches/crossings of the computer-implemented virtual boundary without generating the response event. The number of approaches/touches/crossings may be predefined or may be configured by a user, for example using a gesture 146 and/or one or more other inputs.

In examples the change may temporally limited and the system 100 may allow approaching, touching and/or crossing of the computer-implemented virtual boundary 144 for an amount of time. In examples the amount of time may be predefined or may be configured by a user, for example using a gesture 146 and/or one or more other inputs.

In some examples, a gesture 146 such as a gesture 146 to change a computer-implemented virtual boundary 144 may be spatially restricted. For example, the system 100 may only recognize such a gesture 146 if it is performed in a predefined area of the monitored scene space. In examples the system 100 will recognize a gesture 146 to change a computer-implemented virtual boundary 144 only if it is performed above a certain height (at a location having a z value above a threshold) to prevent children, for example, from changing a computer-implemented virtual boundary 144.

Additionally and/or alternatively a gesture 146, such as a gesture 146 to change a computer-implemented virtual boundary 144 may be recognized by the system 100 only when performed by a certain person/people. The person/people authorized to make a particular gesture 146 may be indicated to the system 100 using a gesture and/or one or more additional inputs. For example a user may point at the authorized person/people and/or point a mobile device at the authorized person/people and/or position the authorized person/people in a viewfinder of a device.

For example, after defining the computer-implemented virtual boundary 144 the person 150 may use his finger to draw a circle around his face to indicate to the system 100 that only he is allowed to change the computer-implemented virtual boundary 144.

### CONDITIONALITY

In some examples a computer-implemented virtual boundary 144 may be conditionally monitored and/or conditionally enabled/disabled. For example, the system 100 may process received data to generate a response event when there is, relative to the computer-implemented virtual boundary 144, a change in a portion of the monitored scene space 140 when one or more criteria are satisfied but does not process received data to generate the response event otherwise.

The criteria may be predefined and/or may be configured by a user using a gesture and/or one or more additional inputs.

In examples any criterion/criteria may be used. For example, any temporal and/or physical criteria may be used. In examples, a computer-implemented virtual boundary 144 may be conditionally monitored dependent upon time of day and/or day of week and/or week of month and/or month of year and/or independence upon the presence of one or more objects 152 in the monitored scene space 140.

For example after defining the computer-implemented virtual boundary 144 the person 150 may perform a gesture 146 to indicate to the system 100 that the computer-implemented virtual boundary 144 should be monitored only when he is not in the monitored scene space 140.

The system 100 recognizes the gesture 146 and subsequently monitors the computer-implemented virtual boundary 144 only when the person 150 is not in the monitored scene space 140.

In some examples the computer-implemented virtual boundary may be monitored when the person 150 leaves the scene space 140 and may be permanently removed when he returns to the scene space 140.

In other examples the computer-implemented virtual boundary 144 may be stored by the system 100 and enabled every time the person 150 leaves the monitored scene space 140 and disabled every time he returns to the monitored scene space 140. Any number of virtual boundaries 144 may be stored by the system 100.

### METHOD

Fig 10 illustrates an example of a method 800. The method 800 may be performed by the system 100.

At block 802, the method 800 comprises: recognizing a first two-handed gesture 148₁ and a second two-handed gesture 148₂ in a monitored scene space 140 to at least partially define a shape and position of a computer-implemented virtual boundary 144 in a corresponding monitoring space 142.

In some examples recognizing a gesture may comprise processing received image data and/or received depth data.

The first two-handed gesture 148₁ in the monitored scene space 140 specifies a first two points in the monitoring space 140 and the second two-handed gesture 148₂ in the monitored scene space 140 specifies a second two points in the monitoring space 142.

In examples the gestures may be as described above in relation to Fig 2 and/or Figs 6 and 7.

At block 804, the method 800 comprises: causing implementation of the computer-implemented virtual boundary 144 in the monitoring space 142 corresponding to the monitored scene space 140.

A shape and position of the computer-implemented virtual boundary 144 is at least partially defined by the first two points in the monitoring space and the second two points in the monitoring space.

In examples the computer-implemented virtual boundary 144 may pass through the first two points and the second two points.

In examples the computer-implemented virtual boundary 144 may be extended and may extend from one or more of the first two points and the second two points.

At block 806, the method 800 comprises: processing received data to generate a response event when there is a change in a portion of the monitored scene space 140 relative to the computer-implemented virtual boundary 144 in the corresponding monitoring space 140.

Where a structural feature has been described, it may be replaced by means for performing one or more of the functions of the structural feature whether that function or those functions are explicitly or implicitly described.

Examples of the disclosure provide for an easy and intuitive way to define virtual boundaries for a surveillance system.

Although embodiments of the present invention have been described in the preceding paragraphs with reference to various examples, it should be appreciated that modifications to the examples given can be made without departing from the scope of the invention as claimed in the appended set of claims.

## Claims

1. A method executed by a system comprising one or more sensors (110) configured to record sensor data (112) from a monitored scene space (140), wherein the one or more sensors (110) are or comprise image sensors (114), wherein the method comprises:
recognizing a first two-handed gesture (1481) and a second two-handed gesture (1482) in the monitored scene space (140) to at least partially define a shape and position of a computer-implemented virtual boundary (144) in a corresponding monitoring space (142), wherein the first two-handed gesture (1481) in the monitored scene space (140) specifies a first two points (p1'(t1), p2'(t1)) in the monitoring space (142) and the second two-handed gesture (1482) in the monitored scene space (140) specifies a second two points (p1'(t2), p2'(t2)) in the monitoring space (142);
causing implementation of the computer-implemented virtual boundary (144) in the monitoring space (142) corresponding to the monitored scene space (140), wherein a shape and position of the computer-implemented virtual boundary (144) is at least defined by the first two points (p1'(t1), p2'(t1)) in the monitoring space (142) and the second two points (p1'(t2), p2'(t2)) in the monitoring space (142);
extending a depth or an area of the computer-implemented virtual boundary (144) outwards from one or more of:
the first two points (p1'(t1), p2'(t1)), and
the second two points (p1'(t2), p2'(t2))
towards one or more limits of the monitoring space (142);
wherein the size of the extension is controlled with an extension gesture,
and wherein if the extension gesture is a movement that does not stop within a threshold value, then an exterior dimension of the virtual boundary is extended to the limits of the monitoring space,
and if the extension gesture is a movement that stops at a point q and does not exceed the threshold value, then the exterior dimension of the virtual boundary is extended to a point corresponding to the point q in the monitoring space; and
processing received data from sensors (110) of the monitored scene space (140) to generate a response event in response to a change in at least a portion of the monitored scene space (140) relative to the computer-implemented virtual boundary (144) in the corresponding monitoring space (142).

2. A method as claimed in any preceding claim, wherein some or all of a line between the first two points in the monitoring space (p1'(t1), p2'(t1)) is within a space demarcated by the computer-implemented virtual boundary (144) and some or all of a line between the second two points in the monitoring space (p1'(t2), p2'(t2)) is within the space demarcated by the computer-implemented virtual boundary (144).

3. A method as claimed in any preceding claim, wherein the computer-implemented virtual boundary (144) is an N-sided polygon having N vertices, wherein the first two points (p1'(t1), p2'(t1)) in the monitoring space (142) define positions of two different vertices or two different sides of the N-sided polygonal boundary (144) in the monitoring space (142) and wherein the second two points in the monitoring space (p1'(t2), p2'(t2)) define positions of two different vertices or two different sides of the N-sided polygon in the monitoring space (142).

4. A method as claimed in claim 1, wherein the first two points in the monitored scene space (p1(t1), p2(t1)) define a first vector and the second two points in the monitored scene space (p1(t2), p2(t2)) define a second vector orthogonal to the first vector.

5. A method as claimed in claim 4, wherein the first vector defines one of a length or width of a rectangle and the second vector defines other of the length or width of the rectangle.

6. A method as claimed in any preceding claim, wherein recognizing the first two-handed gesture (1481) and the second two-handed gesture (1482) comprises processing received image data and/or received depth data to track motion of parts of the user's body in the scene space (140).

7. A method as claimed in any preceding claim, wherein the first hand (1521) of the first two-handed gesture (1481) specifies one of the first two points (p1'(t1)) in the monitoring space (142) defining the computer-implemented virtual boundary (144) and the second hand (1522) of the first two-handed gesture (1481) specifies one of the first two points (p2'(t1)) in the monitoring space (142) defining the computer-implemented virtual boundary (144).

8. A method as claimed in any preceding claim, further comprising recognizing at least one predetermined initial gesture to allow the first two-handed gesture and the second two-handed gesture to be recognized.

9. A method as claimed in any preceding claim, further comprising recognizing at least one predetermined transition gesture to allow the second two-handed gesture (1482) to be recognized distinctly from the first two-handed gesture (1481).

10. A method as claimed in any preceding claim, wherein processing received data to generate a response event comprises processing image data to monitor the computer-implemented virtual boundary (144) to detect activity across the computer-implemented virtual boundary (144) and/or activity within a threshold of the computer-implemented virtual boundary (144).

11. A method as claimed in any preceding claim wherein processing received data to generate a response event is performed if at least one condition is satisfied and is not performed if the at least one condition is not satisfied.

12. An apparatus (120) comprising one or more sensors (110) configured to record sensor data (112) from a monitored scene space (140), wherein the one or more sensors (110) are or comprise image sensors (114) and a computing means configured for performing the method of at least one of claims 1 to 11.

13. Computer program code (322), that when performed by the apparatus of claim 12, causes at least the method of at least one of claims 1 to 11 to be performed.

## Patentansprüche

1. Verfahren, das von einem System ausgeführt wird, das einen oder mehrere Sensoren (110) umfasst, die dazu ausgelegt sind, Sensordaten (112) von einem überwachten Szenenraum (140) aufzuzeichnen, wobei der eine oder die mehreren Sensoren (110) Bildsensoren (114) sind oder diese umfassen, wobei das Verfahren Folgendes umfasst:
Erkennen einer ersten beidhändigen Geste (1481) und einer zweiten beidhändigen Geste (1482) im überwachten Szenenraum (140), um eine Form und eine Position einer computerimplementierten virtuellen Begrenzung (144) in einem entsprechenden Überwachungsraum (142) mindestens teilweise zu definieren, wobei die erste beidhändige Geste (1481) im überwachten Szenenraum (140) erste zwei Punkte (p1'(t1), p2'(t1)) im Überwachungsraum (142) spezifiziert und die zweite beidhändige Geste (1482) im überwachten Szenenraum (140) zweite zwei Punkte (pl'(t2), p2'(t2)) im Überwachungsraum (142) spezifiziert;
Veranlassen einer Implementierung der computerimplementierten virtuellen Begrenzung (144) im Überwachungsraum (142), der dem überwachten Szenenraum (140) entspricht, wobei eine Form und eine Position der computerimplementierten virtuellen Begrenzung (144) mindestens durch die ersten zwei Punkte (p1'(t1), p2'(t1)) im Überwachungsraum (142) und die zweiten zwei Punkte (pl' (t2), p2'(t2)) im Überwachungsraum (142) definiert werden;
Erweitern einer Tiefe oder eines Bereichs der computerimplementierten virtuellen Begrenzung (144) von einem oder mehrerem von Folgendem nach außen:
den ersten zwei Punkten (pl'(t1), p2' (t1)) und
den zweiten zwei Punkten (pl'(t2), p2'(t2)) zu einer oder mehreren Grenzen des Überwachungsraums (142);
wobei die Größe der Erweiterung mit einer Erweiterungsgeste gesteuert wird,
und wobei, wenn die Erweiterungsgeste eine Bewegung ist, die innerhalb eines Schwellwerts nicht beendet wird, eine äußere Abmessung der virtuellen Begrenzung bis zu den Grenzen des Überwachungsraums erweitert wird,
und wenn die Erweiterungsgeste eine Bewegung ist, die an einem Punkt q beendet wird und den Schwellwert nicht überschreitet, die äußere Abmessung der virtuellen Begrenzung bis zu einem Punkt erweitert wird, die dem Punkt q im Überwachungsraum entspricht; und
Verarbeiten von empfangenen Daten von Sensoren (110) des überwachten Szenenraums (140), um in Reaktion auf eine Änderung an mindestens einem Abschnitt des überwachten Szenenraums (140) relativ zur computerimplementierten virtuellen Begrenzung (144) im entsprechenden Überwachungsraum (142) ein Antwortereignis zu erzeugen.

2. Verfahren nach einem der vorhergehenden Ansprüche, wobei eine Linie zwischen den ersten zwei Punkten im Überwachungsraum (pl'(t1), p2' (t1)) teilweise oder vollständig innerhalb eines Raums liegt, der durch die computerimplementierte virtuelle Begrenzung (144) abgegrenzt ist, und eine Linie zwischen den zweiten zwei Punkten im Überwachungsraum (pl'(t2), p2' (t2)) teilweise oder vollständig innerhalb des Raums liegt, der durch die computerimplementierte virtuelle Begrenzung (144) abgegrenzt ist.

3. Verfahren nach einem der vorhergehenden Ansprüche, wobei die computerimplementierte virtuelle Begrenzung (144) ein N-seitiges Polygon mit N Spitzen ist, wobei die ersten zwei Punkte (pl'(t1), p2' (t1)) im Überwachungsraum (142) Positionen von zwei verschiedenen Spitzen oder zwei verschiedenen Seiten der N-seitigen polygonalen Begrenzung (144) im Überwachungsraum (142) definieren und wobei die zweiten zwei Punkte im Überwachungsraum (p1'(t2), p2'(t2)) Positionen von zwei verschiedenen Spitzen oder zwei verschiedenen Seiten des N-seitigen Polygons im Überwachungsraum (142) definieren.

4. Verfahren nach Anspruch 1, wobei die ersten zwei Punkte im überwachten Szenenraum (p1(t1), p2(t1)) einen ersten Vektor definieren und die zweiten zwei Punkte im überwachten Szenenraum (p1(t2), p2(t2)) einen zweiten Vektor orthogonal zum ersten Vektor definieren.

5. Verfahren nach Anspruch 4, wobei der erste Vektor eines von einer Länge oder einer Breite eines Rechtecks definiert und der zweite Vektor ein anderes der Länge oder der Breite des Rechtecks definiert.

6. Verfahren nach einem der vorhergehenden Ansprüche, wobei das Erkennen der ersten beidhändigen Geste (1481) und der zweiten beidhändigen Geste (1482) das Verarbeiten von empfangenen Bilddaten und/oder empfangenen Tiefendaten umfasst, um eine Bewegung von Teilen des Körpers des Benutzers im Szenenraum (140) zu verfolgen.

7. Verfahren nach einem der vorhergehenden Ansprüche, wobei die erste Hand (1521) der ersten beidhändigen Geste (1481) einen der ersten zwei Punkte (pl' (t1)) im Überwachungsraum (142) spezifiziert, die die computerimplementierte virtuelle Begrenzung (144) definieren, und die zweite Hand (1522) der ersten beidhändigen Geste (1481) einen der ersten zwei Punkte (p2' (t1)) im Überwachungsraum (142) spezifiziert, die die computerimplementierte virtuelle Begrenzung (144) definieren.

8. Verfahren nach einem der vorhergehenden Ansprüche, das ferner das Erkennen von mindestens einer vorbestimmten anfänglichen Geste umfasst, um das Erkennen der ersten beidhändigen Geste und der zweiten beidhändigen Geste zu erlauben.

9. Verfahren nach einem der vorhergehenden Ansprüche, das ferner das Erkennen von mindestens einer vorbestimmten Übergangsgeste umfasst, um das eindeutige Erkennen der zweiten beidhändigen Geste (1482) gegenüber der ersten beidhändigen Geste (1481) zu erlauben.

10. Verfahren nach einem der vorhergehenden Ansprüche, wobei das Verarbeiten von empfangenen Daten, um ein Antwortereignis zu erzeugen, das Verarbeiten von Bilddaten umfasst, um die computerimplementierte virtuelle Begrenzung (144) zu überwachen, um eine Aktivität an der computerimplementierten virtuellen Begrenzung (144) und/oder einer Aktivität innerhalb eines Schwellwerts der computerimplementierten virtuellen Begrenzung (144) zu detektieren.

11. Verfahren nach einem der vorhergehenden Ansprüche, wobei das Verarbeiten von empfangenen Daten, um ein Antwortereignis zu erzeugen, durchgeführt wird, wenn mindestens eine Bedingung erfüllt ist, und nicht durchgeführt wird, wenn die mindestens eine Bedingung nicht erfüllt ist.

12. Vorrichtung (120), die einen oder mehrere Sensoren (110), die dazu ausgelegt sind, Sensordaten (112) von einem überwachten Szenenraum (140) aufzuzeichnen, wobei der eine oder die mehreren Sensoren (110) Bildsensoren (114) sind oder diese umfassen, sowie ein Berechnungsmittel umfasst, das zum Durchführen des Verfahrens von mindestens einem der Ansprüche 1 bis 11 ausgelegt ist.

13. Computerprogrammcode (322), der, wenn er von der Vorrichtung von Anspruch 12 durchgeführt wird, mindestens das Durchführen des Verfahrens von mindestens einem der Ansprüche 1 bis 11 veranlasst.

## Revendications

1. Procédé exécuté par un système comprenant un ou plusieurs capteurs (110) configurés pour enregistrer des données de capteur (112) provenant d'un espace scénique (140) surveillé, dans lequel les un ou plusieurs capteurs (110) sont ou comprennent des capteurs d'image (114), dans lequel le procédé comprend :
la reconnaissance d'un premier geste à deux mains (1481) et d'un second geste à deux mains (1482) dans l'espace scénique (140) surveillé pour au moins partiellement définir une forme et une position d'une frontière virtuelle mise en œuvre par ordinateur (144) dans un espace de surveillance (142) correspondant, dans lequel le premier geste à deux mains (1481) dans l'espace scénique (140) surveillé spécifie deux premiers points (pl' (t1), p2' (t1)) dans l'espace de surveillance (142) et le second geste à deux mains (1482) dans l'espace scénique (140) surveillé spécifie deux seconds points (pl'(t2), p2'(t2)) dans l'espace de surveillance (142) ;
le fait d'engendrer la mise en œuvre de la frontière virtuelle mise en œuvre par ordinateur (144) dans l'espace de surveillance (142) correspondant à l'espace scénique (140) surveillé, dans lequel une forme et position de la frontière virtuelle mise en œuvre par ordinateur (144) est au moins définie par les deux premiers points (pl'(t1), p2'(t1)) dans l'espace de surveillance (142) et les deux seconds points (pl' (t2), p2'(t2)) dans l'espace de surveillance (142) ;
l'extension d'une profondeur ou d'une aire de la frontière virtuelle mise en œuvre par ordinateur (144) vers l'extérieur à partir de l'un ou de plusieurs parmi :
les deux premiers points (pl'(t1), p2'(t1)), et
les deux seconds points (pl'(t2), p2'(t2)) vers une ou plusieurs limites de l'espace de surveillance (142) ;
dans lequel la taille de l'extension est commandée avec un geste d'extension,
et dans lequel si le geste d'extension est un mouvement qui ne s'arrête pas au sein d'une valeur seuil, alors une dimension extérieure de la frontière virtuelle est étendue jusqu'aux limites de l'espace de surveillance,
et si le geste d'extension est un mouvement qui s'arrête à un point q et ne dépasse pas la valeur seuil, alors la dimension extérieure de la frontière virtuelle est étendue jusqu'à un point correspondant au point q dans l'espace de surveillance ; et
le traitement de données reçues en provenance de capteurs (110) de l'espace scénique (140) surveillé pour générer un événement de réponse en réponse à une variation d'au moins une portion de l'espace scénique (140) surveillé par rapport à la frontière virtuelle mise en œuvre par ordinateur (144) dans l'espace de surveillance (142) correspondant.

2. Procédé selon une quelconque revendication précédente, dans lequel tout ou partie d'une ligne entre les deux premiers points dans l'espace de surveillance (pl'(t1), p2' (t1)) est au sein d'un espace délimité par la frontière virtuelle mise en œuvre par ordinateur (144) et tout ou partie d'une ligne entre les deux seconds points dans l'espace de surveillance (p1'(t2), p2' (t2)) est au sein de l'espace délimité par la frontière virtuelle mise en œuvre par ordinateur (144).

3. Procédé selon une quelconque revendication précédente, dans lequel la frontière virtuelle mise en œuvre par ordinateur (144) est un polygone à N côtés ayant N sommets, dans lequel les deux premiers points (pl'(t1), p2'(t1)) dans l'espace de surveillance (142) définissent les positions de deux sommets différents ou de deux côtés différents de la frontière polygonale à N côtés (144) dans l'espace de surveillance (142) et dans lequel les deux seconds points dans l'espace de surveillance (pl' (t2), p2' (t2)) définissent les positions de deux sommets différents ou de deux côtés différents du polygone à N côtés dans l'espace de surveillance (142).

4. Procédé selon la revendication 1, dans lequel les deux premiers points dans l'espace scénique surveillé (p1(t1), p2(t1)) définissent un premier vecteur et les deux seconds points dans l'espace scénique surveillé (p1(t2), p2(t2)) définissent un second vecteur orthogonal au premier vecteur.

5. Procédé selon la revendication 4, dans lequel le premier vecteur définit l'une parmi une longueur ou une largeur d'un rectangle et le second vecteur définit l'autre parmi la longueur ou la largeur du rectangle.

6. Procédé selon une quelconque revendication précédente, dans lequel la reconnaissance du premier geste à deux mains (1481) et du second geste à deux mains (1482) comprend le traitement de données d'image reçues et/ou données de profondeur reçues pour suivre le mouvement de parties du corps de l'utilisateur dans l'espace scénique (140).

7. Procédé selon une quelconque revendication précédente, dans lequel la première main (1521) du premier geste à deux mains (1481) spécifie l'un des deux premiers points (p1'(t1)) dans l'espace de surveillance (142) définissant la frontière virtuelle mise en œuvre par ordinateur (144) et la seconde main (1522) du premier geste à deux mains (1481) spécifie l'un des deux premiers points (p2' (t1)) dans l'espace de surveillance (142) définissant la frontière virtuelle mise en œuvre par ordinateur (144).

8. Procédé selon une quelconque revendication précédente, comprenant en outre la reconnaissance d'au moins un geste initial prédéterminé pour permettre au premier geste à deux mains et au second geste à deux mains d'être reconnus.

9. Procédé selon une quelconque revendication précédente, comprenant en outre la reconnaissance d'au moins un geste de transition prédéterminé pour permettre au second geste à deux mains (1482) d'être reconnu distinctement du premier geste à deux mains (1481).

10. Procédé selon une quelconque revendication précédente, dans lequel le traitement de données reçues pour générer un événement de réponse comprend le traitement de données d'image pour surveiller la frontière virtuelle mise en œuvre par ordinateur (144) pour détecter une activité de part et d'autre de la frontière virtuelle mise en œuvre par ordinateur (144) et/ou une activité au sein d'un seuil de la frontière virtuelle mise en œuvre par ordinateur (144).

11. Procédé selon une quelconque revendication précédente dans lequel le traitement de données reçues pour générer un événement de réponse est réalisé si au moins une condition est satisfaite et n'est pas réalisé si l'au moins une condition n'est pas satisfaite.

12. Appareil (120) comprenant un ou plusieurs capteurs (110) configurés pour enregistrer des données de capteur (112) provenant d'un espace scénique (140) surveillé, dans lequel les un ou plusieurs capteurs (110) sont ou comprennent des capteurs d'image (114) et un moyen informatique configuré pour la réalisation du procédé selon au moins l'une des revendications 1 à 11.

13. Code de programme d'ordinateur (322), qui lorsqu'il est réalisé par l'appareil selon la revendication 12, amène au moins le procédé selon au moins l'une des revendications 1 à 11 à être réalisé.
